# EUROPÄISCHE PATENTSCHRIFT

(11) **EP 0 463 309 B1**
(45) Veröffentlichungstag und Bekanntmachung des Hinweises auf die Patenterteilung: **04.08.1993**
(21) Anmeldenummer: 91106097.8
(22) Anmeldetag: 17.04.1991
(51) Int. Cl.: B62D 5/30

(54) **Verfahren zum Betrieb einer Lenkeinrichtung für die Hinterräder eines Kraftfahrzeugs**
Method for the operation of a steering apparatus for the rear wheels of a motor vehicle
Procédé pour le fonctionnement d'un dispositif de direction pour les roues arrières d'une voiture

(30) Priorität: 28.06.1990 DE 4020568
(43) Veröffentlichungstag der Anmeldung: 02.01.1992
(73) Patentinhaber: Bayerische Motoren Werke Aktiengesellschaft, 80788 München (DE)
(72) Erfinder: Seidenfuss, Thomas, W-8069 Jetzendorf (DE); Doleski, Roland, W-8051 Zolling (DE)
(74) Vertreter: Dirscherl, Josef

(56) Entgegenhaltungen:
- EP-A- 0 316 932
- EP-A- 0 328 002
- EP-A- 0 350 020
- DE-A- 3 625 907
- DE-A- 3 816 254
- DE-A- 3 825 280
- GB-A- 2 222 990

## Beschreibung

Die Erfindung bezieht sich auf ein Verfahren nach dem Oberbegriff des Patentanspruchs 1.

Aus der DE-OS 3825280 ist es bekannt, im Fehlerfall die erforderliche Notfallmaßnahme abhängig vom auftretenden Fehler unterschiedlich zu wählen. Es ist ferner aus der DE-OS 3816254 bekannt, im Notfall ein Notbetriebskonzept durchzuführen, bei dem die Lenkwinkel der Hinterräder notfallgerecht gesteuert werden. Als Beispiel hierzu ist angegeben, den Lenkwinkel verzögert auf 0 zu steuern oder starr auf dem zuletzt eingestellten Wert, der in der Regel ungleich 0 ist, festzuhalten.

In beiden Fällen führt das Notbetriebskonzept zwar dazu, ein mögliches Eigenleben der Hinterräder im Notfall zu verhindern und fahrdynamisch problematische Betriebszustände des Kraftfahrzeugs auszuschließen. Es ist jedoch nicht völlig auszuschließen, daß es sich nur um einen vermeintlichen Notfall, d.h. nur um einen vorübergehend auftretenden Fehler handelt, das Notbetriebskonzept somit nicht oder zumindest nicht in der für alle Fehler gleichen Form zum Einsatz kommen muß.

Der Erfindung liegt die Aufgabe zugrunde, ein Verfahren der eingangs genannten Art zu schaffen, das eine Notfallmaßnahme nur dann durchführt, wenn dies tatsächlich erforderlich ist.

Die Erfindung löst diese Aufgabe durch die Merkmale des Patentanspruchs 1.

Wesentlich für die Erfindung ist, daß die Möglichkeit eines nur vermeintlichen Notfalls, d.h. des Fehlers einer Eingangsgröße oder eines Bauteils berücksichtigt wird, indem die Reaktionszeit, d.h. die Zeit bis zum Beginn der Notfallmaßnahme, größer als die Eigenzeit der Lenkeinrichtung gewählt wird. Unter Eigenzeit ist dabei die Zeit zu verstehen, die nach dem Eingehen eines Fehlersignals und dem Beginn der Notfallmaßnahme mindestens vergeht. Ursache hierfür ist die Trägheit des Systems, die wiederum durch Rechenzykluszeiten und/oder mechanische Trägheiten bedingt ist.

Die erfindungsgemäß vorgesehene Differenz zwischen der Reaktions- und der Eigenzeit der Lenkeinrichtung ermöglicht es, im Falle eines nur vorübergehenden Fehlers dessen Verschwinden zu registrieren und in diesem Fall die Notfallmaßnahme nicht oder nur eingeschränkt durchzuführen. Es ist dabei sogar möglich, die Notfallmaßnahme nach ihrem Beginn zu unterbrechen und auf den Normalbetrieb wieder zurückzugehen, sofern der für die Durchführung der Maßnahme zunächst vorhandene Fehler wieder verschwindet.

Vorteilhafte Ausgestaltungen der Erfindung sind in den Patentansprüchen 2 bis 7 wiedergegeben.

Die Maßnahme nach dem Patentanspruch 2 berücksichtigt den Einfluß der Fahrzeuggeschwindigkeit. Bei niedrigen Fahrzeuggeschwindigkeiten kann mit dem Einsatz der Notfallmaßnahme relativ lange gewartet werden, d.h. es kann eine relativ große Reaktionszeit vorgesehen sein. Auch dann, wenn es sich um einen bleibenden Fehler handelt, sind fahrdynamisch kritische Fahrzustände des Kraftfahrzeugs ausgeschlossen. Anders hingegen verhält es sich bei hohen Fahrzeuggeschwindigkeiten. Dort ist aus dem Gebot der Betriebssicherheit die Reaktionszeit um so weniger von der Eigenzeit verschieden, je höher die Fahrzeuggeschwindigkeit ist. Selbst wenn es sich um einen nur vorübergehenden Fehler handelt, muß aus dem Gebot der Betriebssicherheit heraus die Notfallmaßnahme möglichst unverzögert durchgeführt werden. Wie bereits angedeutet, kann aber in diesem Fall das Verschwinden des Fehlers durch Abbruch der Notfallmaßnahme und die Aufnahme des Normalfall-Betriebs berücksichtigt werden.

Entsprechend wird bei der Ausgestaltung der Erfindung gemäß dem Patentanspruch 3 hinsichtlich der Schwere des Fehlers unterschieden. Auch hier wird der Unterschied zwischen der Reaktions- und der Eigenzeit der Lenkeinrichtung mit dem Primat der Betriebssicherheit unter Berücksichtigung der Fehlerschwere eingestellt. Bei einem Fehler geringer Schwere kann durch eine entsprechend große Reaktionszeit auf ein evtl. Verschwinden des Fehlers, d.h. die Existenz eines nur vorübergehenden Fehlers, eingegangen werden. Bei einem Fehler großer Schwere hingegen ist es in jedem Fall erforderlich, die Notfallmaßnahme möglichst unverzüglich einzuleiten, da die Berücksichtigung eines evtl. nur vorübergehenden auftretenden Fehlers eine geringe Wertigkeit besitzt.

Die eingangs angeführten Überlegungen für den Zusammenhang zwischen Reaktions- und Eigenzeit der Lenkeinrichtung gelten auch für die Zeitspanne, innerhalb der eine spezielle, aus der DE-OS 3825280 bekannte Notfallmaßnahme in der in Patentanspruch 4 angegebenen Weise durchgeführt wird. Sie finden ihren Niederschlag in den Patentansprüchen 5 und 6 und enthalten den Zusammenhang zwischen der Zeitspanne für die Durchführung der Notfallmaßnahme und der Fahrzeuggeschwindigkeit bzw. der Schwere des Fehlers.

Für die aus der DE-OS 38 16 254 bekannten Notfallmaßnahme ergibt sich eine besonders vorteilhafte Ausgestaltung der Erfindung, wenn diese Steuerung in der Form erfolgt, wie sie im Patentanspruch 7 angegeben ist. Die Hinterräder zeigen auch im Notfall weiterhin das normale Lenkverhalten im Prinzip und lediglich mit dem Unterschied einer sich ständig verringernden Amplitude der Lenkbewegungen. Es erfolgt somit ein gleitender Übergang auf den Lenkwinkel 0, dem noch die jeweilige Lenkbewegung hinsichtlich ihrer Tendenz und ihrer Richtung entsprechend der Lenkbewegung im Normalfall überlagert ist.

Kann, wie bereits ausgeführt, aufgrund fahrdynamischer Überlegungen, beispielsweise bei hohen Geschwindigkeiten oder schweren Fehlern, das Verschwinden eines Fehlers vor Einleiten der Notfallmaßnahme nicht abgewartet werden, so kann dann, wenn der Fehler während der Notfallmaßnahme verschwindet, auf fahrdynamisch besonders günstige Weise wieder der Normalbetriebsfall eingestellt werden. Es ist dann lediglich die Kopplung zwischen Vorder- und Hinterräder wieder zu verstärken und letztendlich auf den für den Normalfall wesentlichen Wert einzustellen. Für den Fahrzeugbenutzer wird sich somit auch bei einem vermeintlich schweren Fehler bzw. bei hohen Geschwindigkeiten das Auftreten eines nur vorübergehenden Fehlers im Fahrverhalten des Kraftfahrzeugs nicht oder nur unwesentlich bemerkbar machen.

In der Zeichnung ist die Erfindung anhand eines Schaubilds weiter erläutert. Es zeigt
- Fig. 1: den Verlauf einer Hinterradlenkbewegungskomponente,
- Fig. 2: Notfallkonzepte nach dem Stand der Technik und
- Fig. 3: ein erfindungsgemäßes Notfallkonzept.

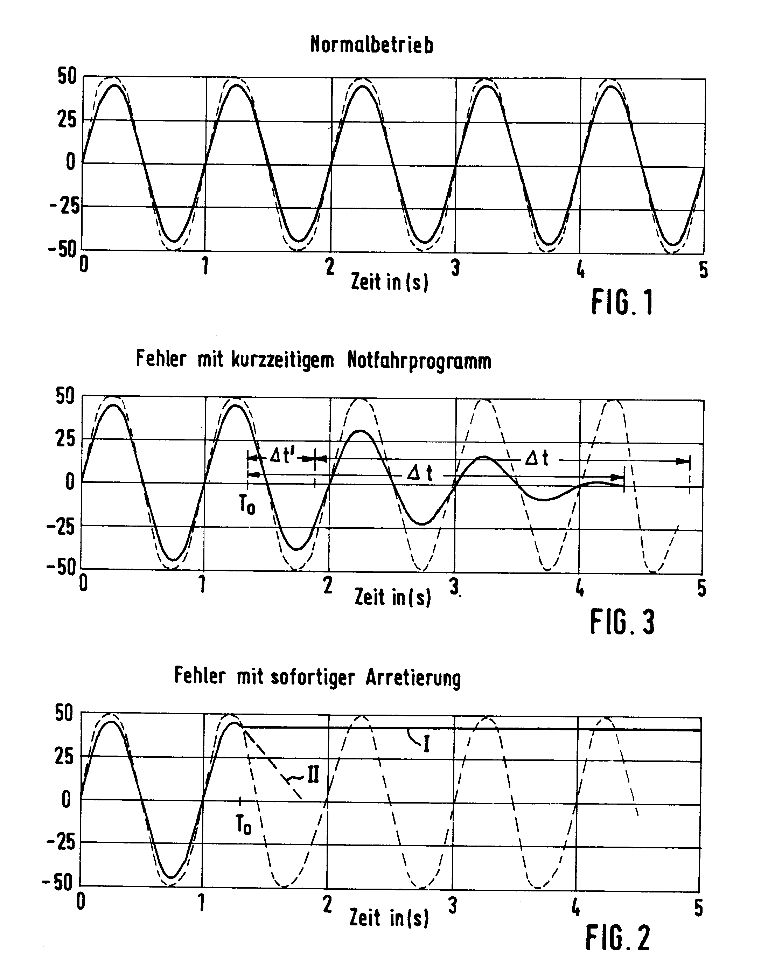

In Fig. 1 ist eine Lenkbewegung eines Hinterrads in Abhängigkeit von der Lenkbewegung der Vorderräder am Beispiel einer Dauersinusschwingung um den Wert 0 dargestellt. Sinusschwingungen sind Bestandteile einer Lenkbewegung, die einer Fourier-Analyse unterzogen werden. Die Lenkbewegung der Vorderräder ist dabei strichliert, die der Hinterräder ausgezogen eingezeichnet.

Der Einfachheit halber ist ein proportionaler Zusammenhang zwischen den beiden Lenkbewegungen angenommen. Ein derartiger Zusammenhang findet sich häufig in bekannten Algorithmen für Hinterradlenkungen, wie sie beispielsweise auch aus der DE-OS 3624547 hervorgehen.

In einem Notfall, dessen Zeitpunkt in den Figuren 2 und 3 mit Tₒ bezeichnet ist, bestehen bekannte Notfallkonzepte, d.h. die dann durchgeführten Notfallmaßnahmen in der sofortigen Arretierung der Hinterräder beim eingestellten Lenkwinkel oder in der Rückführung des Lenkwinkels der Hinterräder auf den Wert 0 in vorgegebener Zeit. Diese beiden Fälle sind in Fig. 2 mit I bzw. II wiedergegeben. In beiden Fällen I und II ist der Lenkwinkel der Hinterräder mit Auftreten des Fehlers, d.h. ab dem Zeitpunkt Tₒ von dem der Vorderräder völlig entkoppelt. Dies macht sich insbesondere bei Änderungen des Vorderrad-Lenkwinkels störend und unangenehm bemerkbar.

Im Gegensatz dazu wird bei der erfindungsgemäßen Notfallmaßnahme die Kopplung zwischen Vorder- und Hinterradlenkwinkel beibehalten. Sie wird jedoch bei Auftreten des Fehlers zunehmend geschwächt. Dies macht sich in der dargestellten Weise als gedämpfte Sinusschwingung bemerkbar. Deutlich ist zu erkennen, daß nach Auftreten des Fehlers der Lenkwinkel der Hinterräder zwar den Wert 0 annimmt. Er nimmt diesen Wert jedoch zum selben Zeitpunkt der auch bei fehlerfreiem Betrieb der Hinterrad-Lenkeinrichtung gegeben ist. Im Gegensatz zu den beiden bekannten Notfallmaßnahmen wird bei der Erfindung der Lenkwinkel 0 aber nur kurzzeitig eingestellt bzw. genau genommen nur überfahren. Anschließend daran wird der Lenkwinkel sogar entsprechend dem Lenkwinkel der Vorderräder ggf. auch in der entgegengesetzten Richtung eingestellt. Lediglich die Amplitude der Sinusschwingung wird zunehmend verringert, während ihre Tendenz und beispielsweise auch die Zeit ihrer Nulldurchgänge beibehalten wird. Für den Fahrzeugbenutzer macht sich das erfindungsgemäße Notfallprogramm nicht bemerkbar, da die Abnahme der Mitkopplung der Hinterräder mit der Bewegung der Vorderräder nicht spürbar ist.

Die gilt insbesondere dann, wenn diese Abnahme der Mitkopplung entsprechend der Fahrzeuggeschwindigkeit mit einer Zeitspanne △ t erfolgt, die um so größer ist, je größer die Fahrzeuggeschwindigkeit ist. Systemtechnisch bedingt kann auch die Zeit △ t entsprechend der Schwere des Fehlers gewählt sein und bei kleinen Fehlern ebenfalls groß sein.

Die Schwere des Fehlers kann, wie bereits mehrfach ausgeführt, variieren und entsprechenden Einfluß auf den Startzeitpunkt und/oder die Zeitspanne für die Durchführung der Notfallmaßnahme, d.h. die Rückführung des Lenkwinkels der Hinterräder auf den Wert 0, haben. Unter einem leichten Fehler ist beispielsweise ein derartiger Fehler zu verstehen, der nur geringe Auswirkungen auf die Funktionsfähigkeit des Systems hat bzw. haben kann. Hierzu ist beispielsweise ein Fehler zu rechnen, der in der Unterschreitung der erforderlichen Bordnetzspannung besteht. Zum einen ist davon auszugehen, daß derartiger Fehler in der Regel nur vorübergehend ist. Zum anderen ist infolge der stets vorhandenen Betriebssicherheitsreserven anzunehmen, daß trotz einer in der Regel nur geringfügigen Unterschreitung des vorgegebenen Spannungs-Sollwertes die Funktionsfähigkeit der Lenkeinrichtung für die Hinterräder des Kraftfahrzeugs gewährleistet ist.

Anders wiederum verhält es sich bei einem schweren Fehler, der erhebliche Auswirkungen auf die Betriebs- bzw. Funktionsfähigkeit der Lenkeinrichtung hat. Hierzu ist ein Fehler zu rechnen, der einem Totalausfall der Lenkeinrichtung entspricht bzw. nahekommt. Bei einer Lenkeinrichtung, die aus Gründen der Redundanz mit zwei parallelen Rechnern arbeitet, liegt ein derartiger Fehler vor, wenn die Ausgangsergebnisse der beiden Rechner deutlich voneinander abweichen. Die Ursache hierfür kann beispielsweise im Totalausfall eines der beiden Rechner bestehen, wobei jedoch nicht zweifelsfrei zu erkennen ist, um welchen Rechner es sich dabei handelt. Im Interesse der Betriebssicherheit ist in einem derartigen Fall die Notfallmaßnahme praktisch unverzüglich nach dem Erkennen des fehlerhaften Betriebszustands einzuleiten und innerhalb möglichst kurzer Zeit auch zu beenden. In diesem Fall dominiert die Betriebssicherheit über die Möglichkeit, einen evtl. nur vorübergehenden Fehler durch einen entsprechend lang gewählten Verzug für den Beginn der Notfallmaßnahme auszublenden.

Die Notfallmaßnahme erfolgt mit zeitlichem Verzug △ t'. Dieser ist gleich der Reaktionszeit der Lenkeinrichtung und setzt sich zusammen aus der Eigenzeit und einer Toleranzzeit. Die Toleranzzeit ist erfindungsgemäß vorgesehen und kann, abhängig von der Fahrzeuggeschwindigkeit und/oder der Schwere des Fehlers zwischen einem Wert nahe 0 bei hoher Fahrzeuggeschwindigkeit bzw. besonders schweren Fehler und einem Wert deutlich größer 0 bei einem besonders leichten Fehler bzw. bei niedrigen Fahrzeuggeschwindigkeiten eingestellt werden.

In letzterem Fall kann die Toleranzzeit relativ lange gewählt werden, um im Falle eines nur vorübergehenden und wieder verschwindenden Fehlers die Notfallmaßnahme möglicherweise überhaupt nicht einzuleiten. Wenn der Fehler wieder verschwindet, kann der Normalfall durch Verstärkung bzw. Wiederherstellung der dann vorgesehenen Kopplung zwischen Vorder- und Hinterrädern wieder eingestellt werden.

## Patentansprüche

1. Verfahren zum Betrieb einer Lenkeinrichtung für die Hinterräder eines Kraftfahrzeugs, die im Normalfall abhängig von verschiedenen Eingangsgrößen und im Notfall notfallgerecht gesteuert werden, dadurch gekennzeichnet, daß die notfallgerechte Lenkbewegung der Hinterräder nach dem Erkennen eines Fehlers einer Eingangsgröße oder Lenkeinrichtung-Baukomponente mit zeitlichem Verzug (△ t') beginnt, der größer als die Eigenzeit der Lenkeinrichtung ist.

2. Verfahren nach Anspruch 1, dadurch gekennzeichnet, daß der zeitliche Verzug abhängig von der Fahrzeuggeschwindigkeit ist.

3. Verfahren nach Anspruch 1 oder 2, dadurch gekennzeichnet, daß der zeitliche Verzug abhängig von der Schwere des Fehlers ist.

4. Verfahren nach einem der Ansprüche 1 bis 3, bei dem im Notfall die Hinterräder auf den Wert 0 eingestellt werden, dadurch gekennzeichnet, daß die Zeitspanne zur Einstellung des Lenkwinkels 0 im Notfall von der Stärke des Fehlers abhängt und um so kleiner ist, je schwerer der Fehler ist.

5. Verfahren nach einem der Ansprüche 1 bis 4, bei dem im Notfall die Hinterräder auf den Wert 0 eingestellt werden, dadurch gekennzeichnet, daß die Zeitspanne in Abhängigkeit von der Fahrzeuggeschwindigkeit gesteuert wird.

6. Verfahren nach Anspruch 5, dadurch gekennzeichnet, daß die Zeitspanne um so größer ist, je größer die Fahrzeuggeschwindigkeit ist.

7. Verfahren nach einem der Ansprüche 1 bis 6, dadurch gekennzeichnet, daß die Hinterräder im Notfall mit zeitlich zunehmend sich verringernder Abhängigkeit von der Lenkbewegung der Vorderräder auf den Lenkwinkel 0 eingestellt werden.

## Claims

1. A method for the operation of a steering apparatus for the rear wheels of a motor vehicle which under normal circumstances is dependent upon various input variables and in an emergency situation may be suitably controlled, characterised in that the emergency steering movement of the rear wheels commences with a time delay (Δt') after recognition of an error in an input variable or fault in a steering apparatus component and that the time delay is greater than the inherent delay of the steering apparatus.

2. A method according to Claim 1, characterised in that the time delay is dependent on the speed of the vehicle.

3. A method according to either Claim 1 or 2, characterised in that the time delay is dependent on the severity of the fault.

4. A method according to any one of Claims 1 to 3, wherein the rear wheels are set to the value 0 in an emergency, characterised in that the time interval for setting the steering angle to 0 is dependent in an emergency on the severity of the fault and decreases with increasing severity of the fault.

5. A method according to any one of Claims 1 to 4, wherein the rear wheels are set to the value 0 in an emergency, characterised in that the time interval is controlled as a function of the vehicle speed.

6. A method according to Claim 5, characterised in that the time interval increases with increasing vehicle speed.

7. A method according to any one of Claims 1 to 6, characterised in that, in an emergency, the rear wheels are set to a steering angle 0 with decreasing dependence on the steering movement of the front wheels over the course of time.

## Revendications

1. Procédé pour le fonctionnement d'un dispositif de direction des roues arrière d'un véhicule automobile, commandé en fonction de certaines valeurs d'entrée dans le cas normal, selon une loi spécifique en cas d'urgence, caractérisé en ce que l'application de la loi d'urgence au mouvaient de direction des roues arrière démarre, après la reconnaissance d'un défaut au niveau d'une valeur d'entrée ou d'un composant du dispositif de direction, au bout d'un retard (Δt') de durée supérieure au temps propre du dispositif de direction.

2. Procédé selon la revendication 1, caractérisé en ce que le retard est fonction de la vitesse du véhicule.

3. Procédé selon la revendication 1 ou 2, caractérisé en ce que le retard est fonction de la gravité du défaut.

4. Procédé selon une des revendications 1 à 3, dans lequel en cas d'urgence, la direction des roues arrière est réglée sur la valeur zéro, caractérisé en ce que l'intervalle de temps pour mener l'angle d'orientation des roues à la valeur zéro, en cas d'urgence, dépend de la gravité du défaut : il est d'autant plus court que le défaut est plus grave.

5. Procédé selon une des revendications 1 à 4, dans lequel en cas d'urgence, la direction des roues arrière est réglée sur la valeur zéro, caractérisé en ce que l'intervalle de temps est fonction de la vitesse du véhicule.

6. Procédé selon la revendication 5, caractérisé en ce que l'intervalle de temps croît avec la vitesse.

7. Procédé selon une des revendications 1 à 6, caractérisé en ce que les roues arrière, en cas d'urgence, ont leur angle de direction ramené à zéro en fonction, de plus en plus décroissante avec le temps, du mouvement de direction des roues avant.
